# EUROPEAN PATENT APPLICATION

(11) **EP 4 475 358 A1**
(43) Date of publication of application: **11.12.2024**
(21) Application number: 22930280.7
(22) Date of filing: 09.03.2022
(51) Int. Cl.: H01S 3/067, G01S 7/48, G01S 7/497, G01S 17/32, G01S 17/10

(54) **LIGHT SOURCE GENERATION APPARATUS, DETECTION DEVICE AND TERMINAL**

(71) Applicant: Huawei Technologies Co., Ltd., Shenzhen, Guangdong 518129 (CN)
(72) Inventor: WANG, Chao, Shenzhen, Guangdong 518129 (CN)
(74) Representative: Pfenning, Meinig & Partner mbB
(86) International application number: PCT/CN2022/080031
(87) International publication number: WO 2023/168639

(57) **Abstract**

A light source generation apparatus, a detection device, and a terminal are used to better improve flexibility of an optical fiber laser on the premise of obtaining high power, and are used for self-driving or assisted driving. The light source generation apparatus includes an optical signal generation module and N power amplification modules. The optical signal generation module is connected to the N power amplification modules, and N is a positive integer. The optical signal generation module is configured to generate an optical signal pulse. The N power amplification modules are configured to amplify the optical signal pulse. The optical signal generation module is located in a lidar, and the N power amplification modules are located outside the lidar.

## Description

### TECHNICAL FIELD

This application relates to the field of sensor technologies, and in particular, to a light source generation apparatus, a detection device, and a terminal.

### BACKGROUND

A lidar is an indispensable and important sensor in the future self-driving field. With rapid development of laser detection technologies, a higher requirement is imposed on performance of the lidar. In view of generally low average power of optical fiber lasers, more attention is paid to flexibility and electro-optical conversion efficiency of high-performance optical fiber lasers.

Currently, in a manner of increasing power of the optical fiber laser, more pump sources and a longer gain optical fiber are usually used. However, in this manner, the electro-optical conversion efficiency is still low, and a system volume is also increased, bringing poor flexibility.

### SUMMARY

Embodiments of this application provide a light source generation apparatus, a detection device, and a terminal, to better improve flexibility of an optical fiber laser.

According to a first aspect, embodiments of this application provide a light source generation apparatus. The light source generation apparatus includes:
an optical signal generation module and N power amplification modules, where the optical signal generation module is connected to the N power amplification modules, and N is a positive integer; the optical signal generation module is configured to generate an optical signal pulse; the N power amplification modules are configured to amplify the optical signal pulse; and the optical signal generation module is located in a lidar, and the N power amplification modules are located outside the lidar.

Because a current optical fiber laser has poor flexibility and low electro-optical conversion efficiency, this application provides the light source generation apparatus. The optical signal generation module in the light source generation apparatus is placed in the lidar, and the power amplification module in the light source generation apparatus is placed outside the lidar. The optical signal generation module and the power amplification module are disposed separately, so that a heat distribution status of the light source generation apparatus can be effectively improved, to facilitate heat dissipation of a system. In this way, a problem of low electro-optical conversion efficiency caused by thermal lens effect generated by the light source generation apparatus in an actual application process can be effectively avoided. In addition, based on the light source generation apparatus provided in embodiments of this application, in an actual application process, a quantity of power amplification modules connected to the optical signal generation module, a layout position of the power amplification module connected to the optical signal generation module, and the like may be adjusted based on a scenario and a requirement. For example, when power of the optical fiber laser needs to be increased, adjustment may be flexibly performed in a manner of increasing the quantity of power amplification modules connected to the optical signal generation module, to effectively reduce problems of a large system volume, poor heat dissipation, and the like that are caused by increasing of a length of a gain optical fiber of the laser or increasing of a quantity of pump sources of the laser when the power of the existing optical fiber laser is increased.

A design idea of a traditional optical fiber laser system architecture is broken through, freedom of a radar system layout scenario is effectively increased, and a volume of the lidar is effectively reduced. In a possible design, the optical signal pulse generated by the optical signal generation module is transmitted to the N power amplification modules through a filter; and the filter is configured to perform noise reduction processing on the optical signal pulse.

In this design manner, when transmitting the generated optical signal pulse to the power amplification module, the optical signal generation module performs noise reduction processing on the optical signal pulse by using the filter, so that quality of an optical signal pulse obtained by the power amplification module can be better ensured.

In a possible design, the optical signal pulse generated by the optical signal generation module is transmitted to the N power amplification modules through a first collimator, a filter, and a second collimator sequentially; the first collimator is configured to convert the optical signal pulse in the optical signal generation module into collimated light; and the second collimator is configured to couple the collimated light to the N power amplification modules.

In this design manner, when the optical signal generation module transmits the generated optical signal pulse to the power amplification module, the generated optical signal pulse passes through the first collimator, the filter, and the second collimator sequentially, so that light can be coupled into the power amplification module with maximum efficiency. In addition, quality of the optical signal pulse is ensured, and energy utilization can also be effectively improved.

In a possible design, the optical signal generation module includes one or more of the following: a seed source configured to generate the optical signal pulse, at least one optical isolator, at least one pump source, at least one erbium-doped optical fiber, a circulator, a Faraday reflector, at least one combiner, and a temperature control apparatus.

In this design manner, composition of the optical signal generation module is provided. For example, the optical signal generation module may include one or more of the following: a seed source, at least one optical isolator, at least one pump source, at least one erbium-doped optical fiber, a circulator, a Faraday reflector, at least one combiner, and a temperature control apparatus. This is not limited herein.

In a possible design, the pump source in the optical signal generation module includes a first pump source and a second pump source, a band of the first pump source is 900 nm to 1000 nm, and a band of the second pump source is 1400 nm to 1500 nm.

In this design manner, the optical signal generation module uses a bidirectional pumping solution, for example, uses the pump source with the band of 900 nm to 1000 nm and the pump source with the band of 1400 nm to 1500 nm, so that an efficiency loss caused by a quantum loss can be effectively reduced.

In a possible design, the power amplification module includes one or more of the following: a circulator, at least one combiner, at least one pump source, at least one optical fiber, a filter, a temperature control apparatus, and a Faraday reflector. Each power amplification module of the N power amplification modules is of a different structure, each power amplification module of the N power amplification modules is of a same structure, or some power amplification modules of the N power amplification modules are of a same structure.

In this design manner, composition of the power amplification module is provided. For example, the power amplification module includes one or more of the following: a circulator, at least one combiner, at least one pump source, at least one optical fiber, a filter, a temperature control apparatus, and a Faraday reflector. This is not limited herein.

In a possible design, the N power amplification modules are selected from H power amplification modules for connection, to form the light source generation apparatus; and H is a positive integer, and H is greater than or equal to N.

In this design manner, this application provides a flexible construction manner of the light source generation apparatus. For example, selection may be performed in the H power amplification modules, so that the selection may be performed according to an actual requirement. In this way, the design idea of the traditional optical fiber laser system architecture is broken through, and freedom of an apparatus structure is effectively increased.

In a possible design, in the H power amplification modules, the N connected power amplification modules are switched to M power amplification modules, and M is a positive integer; and the N power amplification modules and the M power amplification modules are used in different scenarios.

In this design manner, based on an actual application scenario, the power amplification modules that need to be connected and/or the quantity of power amplification modules that need to be connected may be increased or reduced as required. For example, in the H power amplification modules, the connected N power amplification modules are switched to the M power amplification modules, so that adjustment can be performed according to an actual requirement, and adaptability is stronger.

In a possible design, when amplification power needs to be reduced, a first power amplification module connected to the optical signal generation module is switched to a second power amplification module, and amplification power of the first power amplification module is greater than amplification power of the second power amplification module.

In this design manner, in a scenario in which the amplification power needs to be reduced, the optical signal generation module may switch the connected first power amplification module with high amplification power to the second power amplification module with low amplification power, thereby effectively improving system performance and achieving higher flexibility.

In a possible design, when amplification power needs to be increased, the second power amplification module connected to the optical signal generation module is switched to the first power amplification module, and amplification power of the first power amplification module is greater than amplification power of the second power amplification module.

In this design manner, in a scenario in which the amplification power needs to be increased, the optical signal generation module may switch the connected second power amplification module with low amplification power to the first power amplification module with high amplification power, thereby effectively improving system performance and achieving higher flexibility.

In a possible design, when amplification power needs to be increased, the optical signal generation module is additionally connected to the second power amplification module on the basis of being connected to the first power module.

In a possible design, when amplification power needs to be increased, the first power amplification module connected to the optical signal generation module is switched to the second power amplification module and a third power amplification module, and a sum of amplification power of the second power amplification module and the third power amplification module is greater than amplification power of the first power amplification module.

In a possible design, when amplification power needs to be reduced, the second power amplification module and the third power amplification module that are connected to the optical signal generation module are switched to the first power amplification module, and a sum of amplification power of the second power amplification module and the third power amplification module is greater than amplification power of the first power amplification module.

In the foregoing several design manners of replacing a power module, construction and adjustment operations performed on the light source generation apparatus in the actual application scenario in this embodiment of this application are listed, and flexibility and adaptability are higher.

In a possible design, the connected power amplification modules may be switched from the N power amplification modules to the M power amplification modules in a pluggable manner.

In this design manner, this embodiment of this application supports an extended feature of "pluggable", and flexibility is higher.

In this implementation, the pluggable feature may be implemented by using a flange port or through optical fiber fusion splicing. This is not limited herein.

In a possible design, a quantity of optical fibers in the second power amplification module is less than a quantity of optical fibers in the first power amplification module; or power of the pump source of the second power amplification module is less than power of the pump source of the first power amplification module.

In this design manner, a composition manner in which the first power amplification module is larger than the second power amplification module is provided.

In a possible design, the power amplification module performs temperature control adjustment independently of the optical signal generation module.

In this design manner, a temperature control system of the optical signal generation module and a temperature control system of the power amplification module are independent of each other, so that the optical signal generation module and the power amplification module can better ensure the quality of the optical signal pulse, and heat generated by a radar system can also be lower and more distributed. This helps reduce a heat balance temperature of the system, and reduction of the heat balance temperature also helps achieve higher total electro-optical conversion efficiency of the system.

In a possible design, an optical signal pulse amplified by the N power amplification modules is converged to a third collimator for output.

In this design manner, the power amplification module outputs the amplified optical signal pulse by using the third collimator, so that energy utilization can be effectively improved.

In a possible design, the optical signal generation module is further configured to:
perform time domain gating by controlling a switch that is of the third collimator and that is configured to output light.

In this design manner, the optical signal generation module implements time domain gating by controlling an optical switch, so that a parasitic pulse can be effectively removed, and advance leakage of the optical signal pulse can be reduced.

In a possible design, the third collimator is further configured to be connected to an optical splitter, to implement optical splitting output.

In this design manner, when the optical signal pulse is output, the optical signal pulse is output by using the optical splitter, so that power interception can be better implemented, and flexibility is higher.

According to a second aspect, a detection device is provided. The detection device includes the light source generation apparatus provided in any one of the first aspect and the possible designs of the first aspect. In the foregoing technical solutions, the optical signal generation module is placed in the lidar, and the power amplification module is placed outside the lidar, so that the power amplification module, the layout position, and the like can be adjusted based on a scenario and a requirement. In this way, the design idea of the traditional optical fiber laser system architecture is broken through, and the freedom of the radar system layout scenario is effectively increased. In addition, the optical signal generation module and the power amplification module are separately disposed, so that the volume of the lidar can be effectively reduced.

According to a third aspect, embodiments of this application provide a terminal. The terminal may include the light source generation apparatus provided in any one of the first aspect and the possible designs of the first aspect. Optionally, the terminal may be a smart communication device, a smart home device, a smart manufacturing device, a smart transportation device, or the like, for example, a vehicle, an unmanned aerial vehicle, an unmanned transportation vehicle, or a robot.

In a possible design, when the terminal is a vehicle, the vehicle may include the light source generation apparatus provided in any one of the first aspect and the possible designs of the first aspect.

The light source generation apparatus includes the optical signal generation module and the N power amplification modules. The optical signal generation module is connected to the N power amplification modules, and N is the positive integer. The optical signal generation module is configured to generate the optical signal pulse. The N power amplification modules are configured to amplify the optical signal pulse. The optical signal generation module is located in the lidar, and the N power amplification modules are located outside the lidar.

According to the vehicle provided in the third aspect, the optical signal pulse may be generated by the light source generation apparatus, to detect a target object.

According to a fourth aspect, this application provides a chip. The chip is connected to a memory, and is configured to read and execute a computer program or instructions stored in the memory, to control the light source generation apparatus provided in any one of the first aspect and the possible designs of the first aspect to implement the foregoing content.

According to a fifth aspect, a computer-readable storage medium is provided. The computer-readable storage medium stores a computer program or instructions. When the computer program or the instructions are executed by a light source generation apparatus, the light source generation apparatus is enabled to perform the operation provided in any one of the first aspect and the possible designs of the first aspect.

In a possible design, the light source generation apparatus may select, by executing the computer program or the instructions, N power amplification modules from H power amplification modules for connection.

In a possible design, the light source generation apparatus may switch the N connected power amplification modules in the H power amplification modules to M power amplification modules by executing the computer program or the instructions.

In a possible design, when amplification power needs to be reduced, the light source generation apparatus may switch a connected first power amplification module to a second power amplification module by executing the computer program or the instructions, and amplification power of the first power amplification module is greater than amplification power of the second power amplification module.

In a possible design, when amplification power needs to be increased, the light source generation apparatus may switch the connected second power amplification module to the first power amplification module by executing the computer program or the instructions, and amplification power of the first power amplification module is greater than amplification power of the second power amplification module.

In a possible design, when amplification power needs to be increased, the light source generation apparatus may be additionally connected, by executing the computer program or the instructions, to the second power amplification module on the basis of being connected to the first power module.

When amplification power needs to be increased, the first power amplification module connected to an optical signal generation module is switched to the second power amplification module and a third power amplification module, and a sum of amplification power of the second power amplification module and the third power amplification module is greater than amplification power of the first power amplification module.

In a possible design, when amplification power needs to be reduced, the light source generation apparatus may switch, by executing the computer program or the instructions, the connected second power amplification module and the connected third power amplification module to the first power amplification module, and a sum of amplification power of the second power amplification module and the third power amplification module is greater than amplification power of the first power amplification module.

According to a sixth aspect, this application provides a computer program product. The computer program product includes a computer program or instructions. When the computer program or the instructions are executed by a light source generation apparatus, the light source generation apparatus is enabled to perform the operation provided in any one of the first aspect and the possible designs of the first aspect.

### BRIEF DESCRIPTION OF DRAWINGS

FIG. 1 is a diagram of an application scenario of a light source generation apparatus according to an embodiment of this application;
FIG. 2 is a diagram of a principle structure of a light source generation apparatus according to an embodiment of this application;
FIG. 3 is a diagram of a first application architecture of a light source generation apparatus according to an embodiment of this application;
FIG. 4 is a diagram of a second application architecture of a light source generation apparatus according to an embodiment of this application;
FIG. 5 is a diagram of a third application architecture of a light source generation apparatus according to an embodiment of this application;
FIG. 6 is a diagram of a fourth application architecture of a light source generation apparatus according to an embodiment of this application;
FIG. 7 is a diagram of a fifth application architecture of a light source generation apparatus according to an embodiment of this application;
FIG. 8 is a diagram of a sixth application architecture of a light source generation apparatus according to an embodiment of this application;
FIG. 9 is a diagram of a seventh application architecture of a light source generation apparatus according to an embodiment of this application;
FIG. 10 is a diagram of an eighth application architecture of a light source generation apparatus according to an embodiment of this application;
FIG. 11 is a diagram of a structure of a lidar according to an embodiment of this application; and
FIG. 12 is a diagram of a structure of a terminal device according to an embodiment of this application.

### DESCRIPTION OF EMBODIMENTS

The following further describes embodiments of this application in detail with reference to accompanying drawings.

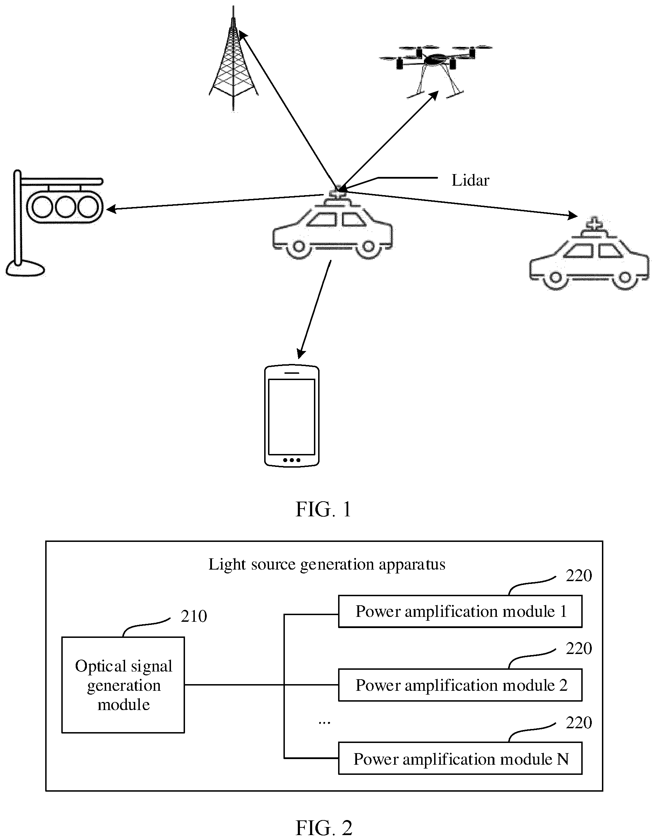

As shown in FIG. 1, optional application scenarios of a light source generation apparatus in this application are listed.

The light source generation apparatus in embodiments of this application may be installed on a mobile device. For example, the light source generation apparatus in this application may be used in a transportation means or a robot.

The transportation means includes but is not limited to a transportation means driven by non-renewable energy or new energy. The transportation means driven by the non-renewable energy may include a vehicle, a bus, a truck, or the like driven by fuel such as gasoline, diesel, or ethanol. The transportation means driven by the new energy may include a vehicle, a bus, a truck, or the like driven by electric energy.

For example, in this application, the light source generation apparatus may be installed on a vehicle, may be used in a case such as self-driving scenario or an internet-connected vehicle scenario, and may be used as a vehicle-mounted lidar. For another example, the light source generation apparatus in this application is installed on aircraft, and is used as an airborne lidar or the like.

In an optional application scenario of this application, the light source generation apparatus may alternatively be installed on a mobile platform, for example, a satellite. In this case, the light source generation apparatus needs assistance of another apparatus in the mobile platform to determine a current position and steering information of the light source generation apparatus, to ensure availability of measured data.

In an optional application scenario of this application, the light source generation apparatus may alternatively be installed on a fixed platform. For example, a lidar may be installed on a roadside unit (roadside unit, RSU), a roof, a base station, or the like.

In addition, the light source generation apparatus in this application may alternatively be used in another possible scenario. This is not limited herein.

Due to rapid development of technologies, more attention is paid to flexibility and electro-optical conversion efficiency of high-performance optical fiber lasers. Currently, in view of generally low average power of optical fiber lasers, in a manner of increasing power of the optical fiber laser, more pump sources and a longer gain optical fiber are usually used. However, in this manner, the electro-optical conversion efficiency is still low, and a system volume is also increased, bringing poor flexibility.

In conclusion, a laser is urgently needed to effectively ensure electro-optical conversion efficiency and flexibility of the laser on the premise of obtaining high power.

Based on this, embodiments of this application provide a light source generation apparatus. An optical signal generation module is placed in a lidar, and a power amplification module is placed outside the lidar, so that the power amplification module, a layout position, and the like can be adjusted based on a scenario and a requirement. In this way, a design idea of a traditional optical fiber laser system architecture is broken through, and freedom of a radar system layout scenario is effectively increased.

The following describes the light source generation apparatus provided in this application in detail with reference to specific accompanying drawings and embodiments.

FIG. 2 shows a light source generation apparatus according to an embodiment of this application. The light source generation apparatus includes an optical signal generation module 210 and N power amplification modules 220. The optical signal generation module 210 is connected to the N power amplification modules 220, and N is a positive integer.

The optical signal generation module 210 is configured to generate an optical signal pulse.

The N power amplification modules 220 are configured to amplify the optical signal pulse. The optical signal generation module is located in a lidar, and the N power amplification modules are located outside the lidar.

In an optional solution, the N power amplification modules are selected from H power amplification modules, and H is a positive integer greater than or equal to N.

For example, it is assumed that five power amplification modules (that is, H=5) and one optical signal generation module are deployed in a vehicle, and the five power amplification modules are a power amplification module 1 to a power amplification module 5. In this way, the optical signal generation module may perform selection in the five power amplifier modules according to an actual requirement. For example, the optical signal generation module selects three power amplification modules: the power amplification module 1, the power amplification module 2, and the power amplification module 5 (that is, N=3) for connection, to form the light source generation apparatus in embodiments of this application. For another example, the optical signal generation module may further switch, in a pluggable manner according to an actual requirement, the connected power amplification module 1, the connected power amplification module 2, and the connected power amplification module 5 to the power amplification module 3 and the power amplification module 4.

In an optional solution, in this embodiment of this application, H power amplification modules support use of M optical signal generation modules, and H is a positive integer and is greater than or equal to a sum of quantities of power amplification modules selected by the M optical signal generation modules.

For example, if quantities of power amplification modules selected by the power amplification modules of the M optical signal generation modules are *N*₁, *N*₂*, N*₃ ... *N*_{(*M*-1)}, and *N_{M},* H≥(*N*₁*+N*₂*+N*₃ *...+N*_{(*M*-1)}*+Nₘ*).

For example, it is assumed that six power amplification modules (that is, H=6) are deployed in a vehicle, and the six power amplification modules are a power amplification module 1 to a power amplification module 6. Two lidars are deployed in the vehicle, the lidars each include one optical signal generation module, and the optical signal generation modules are an optical signal generation module 1 and an optical signal generation module 2.

During actual connection for construction of the light source generation apparatus, for example, the optical signal generation module 1 may select, for connection, the power amplification module 1 and the power amplification module 3 from the six power amplification modules according to an actual requirement, to form a light source generation apparatus 1, and the optical signal generation module 2 may select, for connection, the power amplification module 4 from the remaining four power amplification modules according to an actual requirement, to form a light source generation apparatus 2.

In an optional solution, the optical signal generation module 210 may include one or more of the following passive components:
one or more of the following: a seed source configured to generate the optical signal pulse, at least one optical isolator, at least one pump source, at least one erbium-doped optical fiber, a circulator, a Faraday reflector, at least one combiner, and a temperature control apparatus.

When the optical signal generation module 210 includes a plurality of pump sources, bands of different pump sources may be the same or different.

For example, when the optical signal generation module 210 includes a pump source 1, a pump source 2, and a pump source 3, bands of the pump source 1 and the pump source 2 may be set to 900 nm to 1000 nm, and a band of the pump source 3 may be set to 1400 nm to 1500 nm. For another example, when the optical signal generation module 210 includes a pump source 1, a pump source 2, a pump source 3, and a pump source 4, bands of the pump source 1 to the pump source 4 may all be set to 900 nm to 1000 nm.

The seed source is configured to emit detection light, that is, the optical signal pulse. The light emitted by the seed source may be non-visible light, for example, light with a wavelength greater than 760 nm.

In addition, different light sources may be selected as seed sources in the light source generation apparatus in embodiments of this application. For example, a laser transmitter is used. An emitted laser has advantages of good coherence, good parallelism, and high brightness, and is suitable for detection.

In an optional solution, the power amplification module 220 may include one or more of the following passive components:
one or more of the following: a circulator, at least one combiner, at least one pump source, at least one optical fiber, a filter, a Faraday reflector, and a temperature control apparatus.

In this embodiment of this application, when both the optical signal generation module and the power amplification module include a temperature control apparatus, the temperature control apparatus configured to adjust a temperature of the optical signal generation module and the temperature control apparatus configured to adjust a temperature of the power amplification module may not be a same temperature control apparatus, that is, the temperature control apparatus of the optical signal generation module is independent of the temperature control apparatus of the power amplification module.

Based on this construction design manner, the optical signal generation module and the power amplification module can independently perform temperature control adjustment, so that the optical signal generation module and the power amplification module can better ensure quality of the optical signal pulse, and heat generated by a radar system can also be lower and more distributed. This helps reduce a heat balance temperature of the system, and reduction of the heat balance temperature also helps achieve higher total electro-optical conversion efficiency of the system.

To better describe the light source generation apparatus provided in this application, the following describes a structure of the light source generation apparatus by using examples based on the architecture shown in FIG. 2. Details are not limited to the following several cases.

Case 1: The light source generation apparatus includes one optical signal generation module and one power amplification module. The power method module included in the light source generation apparatus is selected from H power amplification modules, and H is a positive integer.

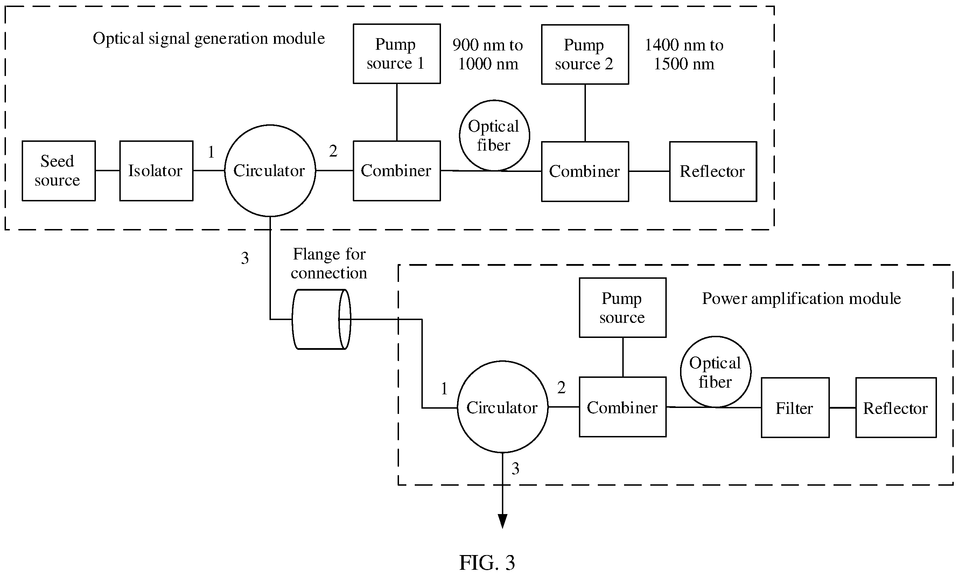

For example, as shown in FIG. 3, it is assumed that the light source generation apparatus provided in embodiments of this application includes an optical signal generation module and one power amplification module.

The optical signal generation module includes a seed source, one optical isolator, one circulator, a pump source 1, a pump source 2, two combiners, one erbium-doped optical fiber, and one Faraday reflector. The power amplification module includes one circulator, one combiner, one pump source, one optical fiber, one filter, and one Faraday reflector.

A band of the pump source 1 in the optical signal generation module may be set to 900 nm to 1000 nm, and a band of the pump source 2 may be set to 1400 nm to 1500 nm. In this way, bidirectional pumping is implemented, and an efficiency loss caused by a quantum loss is effectively reduced.

Case 2: The light source generation apparatus includes one optical signal generation module and two power amplification modules that have a same amplification power. The two power method modules included in the light source generation apparatus are selected from H power amplification modules, and H is a positive integer.

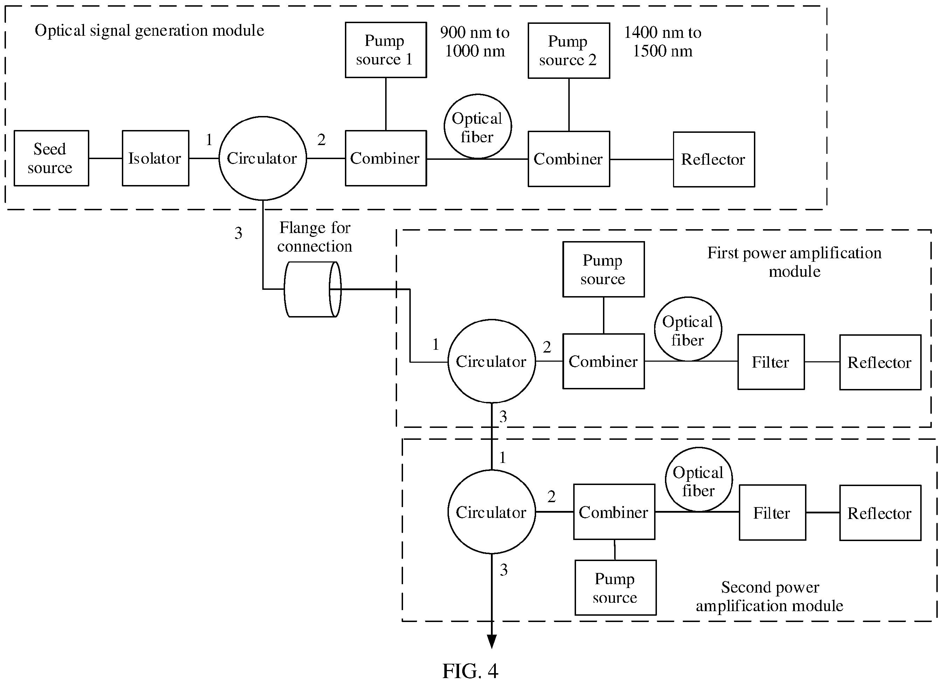

For example, as shown in FIG. 4, it is assumed that the light source generation apparatus provided in embodiments of this application includes an optical signal generation module and two power amplification modules, for example, a first power amplification module and a second power amplification module. Amplification power of the first power amplification module is the same as amplification power of the second power amplification module.

The optical signal generation module includes a seed source, one optical isolator, one circulator, two pump sources, two combiners, one erbium-doped optical fiber, and one Faraday refl ector.

Both the first power amplification module and the second power amplification module include one circulator, one combiner, one pump source, one optical fiber, one filter, and one Faraday reflector.

Case 3: The light source generation apparatus includes one optical signal generation module and two power amplification modules that have different amplification power. The two power method modules included in the light source generation apparatus are selected from H power amplification modules, and H is a positive integer.

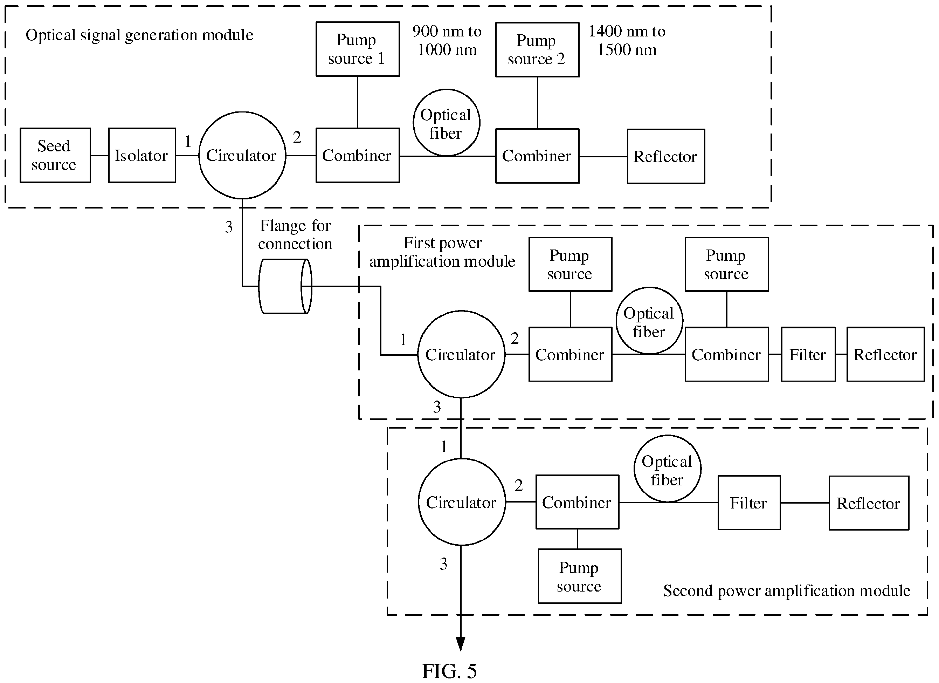

For example, as shown in FIG. 5, it is assumed that the light source generation apparatus provided in embodiments of this application includes an optical signal generation module and two power amplification modules, for example, a first power amplification module and a second power amplification module. Amplification power of the first power amplification module is different from amplification power of the second power amplification module, and the amplification power of the first power amplification module is greater than the amplification power of the second power amplification module.

The optical signal generation module includes a seed source, one optical isolator, one circulator, two pump sources, two combiners, one erbium-doped optical fiber, and one Faraday refl ector.

The first power amplification module includes one circulator, one combiner, two pump sources, one optical fiber, one filter, and one Faraday reflector.

The second power amplification module includes one circulator, one combiner, one pump source, one optical fiber, one filter, and one Faraday reflector.

Further, embodiments of this application are based on different scenarios. The optical signal generation module in the light source generation apparatus may switch the connected N power amplification modules in the H power amplification modules to the M power amplification modules. In this way, a power amplification module can be added or removed as required based on an actual application scenario, and flexibility is higher. M, H, and N are all positive integers, and H is greater than or equal to M or N.

In an optional solution, the light source generation apparatus provided in embodiments of this application supports a pluggable feature. Based on this, the optical signal generation module in the light source generation apparatus may switch the connected N power amplification modules to the M power amplification modules in a pluggable manner.

In this embodiment of this application, a pluggable feature between the optical signal generation module and the power amplification module may be implemented by using a flange port or through optical fiber fusion splicing. This is not limited herein.

For example, it is assumed that the optical signal generation module in the current light source generation apparatus is connected to a first power amplification module.

When amplification power needs to be reduced, the optical signal generation module switches the connected first power amplification module to a second power amplification module with low amplification power in a pluggable manner.

For example, it is assumed that the optical signal generation module in the current light source generation apparatus is connected to a second power amplification module.

When amplification power needs to be increased, the optical signal generation module switches the connected second power amplification module to a first power amplification module with high amplification power in a pluggable manner.

For example, it is assumed that the optical signal generation module in the current light source generation apparatus is connected to a second power amplification module.

When amplification power needs to be increased, the optical signal generation module is simultaneously connected to a first power amplification module in a pluggable manner on the basis of being connected to the second power module.

For example, it is assumed that the optical signal generation module in the current light source generation apparatus is connected to a first power amplification module and a second power amplification module.

When amplification power needs to be increased, the optical signal generation module switches the connected second power amplification module to a third power amplification module with high amplification power in a pluggable manner on the basis of maintaining connection to the first power module.

For example, it is assumed that the optical signal generation module in the current light source generation apparatus is connected to a first power amplification module and a second power amplification module.

When amplification power needs to be increased, the optical signal generation module may switch, in a pluggable manner, the connected first power amplification module and the connected second power amplification module to a third power amplification module and a fourth power amplification module that have high amplification power.

Further, in this embodiment of this application, each power amplification module of the N power amplification modules connected to the optical signal generation module may be located at a different position.

For example, it is assumed that the light source generation apparatus is installed on a vehicle, and the optical signal generation module in the light source generation apparatus is connected to a first power amplification module and a second power amplification module.

The first power amplification module may be located in a front of the vehicle, and the second power amplification module may be located in a rear of the vehicle.

For example, it is assumed that the light source generation apparatus is installed on a vehicle, and the optical signal generation module in the light source generation apparatus is connected to a first power amplification module, a second power amplification module, and a third power amplification module.

The first power amplification module and the second power amplification module may be located in a front of the vehicle, and the third power amplification module may be located in a rear of the vehicle.

For example, it is assumed that the light source generation apparatus is installed on a vehicle, and the optical signal generation module in the light source generation apparatus is connected to a first power amplification module, a second power amplification module, and a third power amplification module.

The first power amplification module may be located in a front of the vehicle, the second power amplification module may be located in a body of the vehicle, and the third power amplification module may be located in a rear of the vehicle.

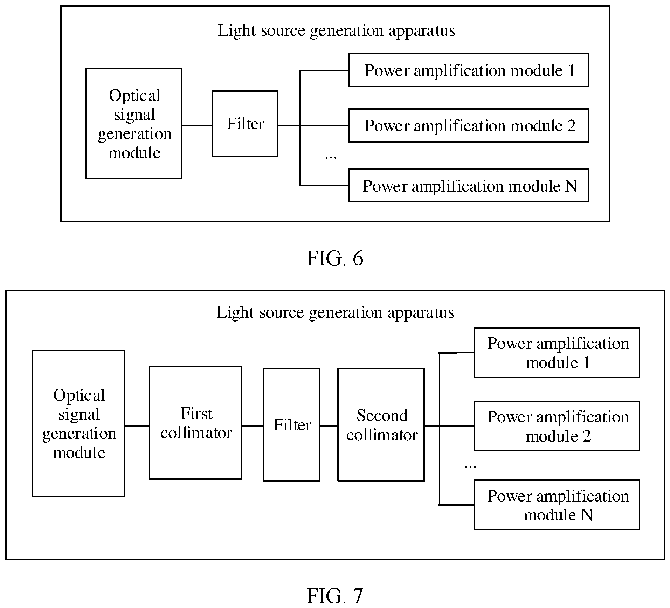

Further, as shown in FIG. 6, a filter may alternatively be included between an optical signal generation module and a power amplification module in a light source generation apparatus. In this way, noise reduction processing can be performed, by using the filter, on an optical signal pulse generated by the optical signal life module, and then a processed optical signal pulse is transmitted to the power amplification module, to better ensure quality of the optical signal pulse obtained by the power amplification module.

Further, as shown in FIG. 7, a first collimator, a filter, and a second collimator may alternatively be included between an optical signal generation module and a power amplification module in a light source generation apparatus. The first collimator is configured to convert an optical signal pulse in the optical signal generation module into collimated light, and the second collimator is configured to couple the collimated light to N power amplification modules.

For example, the optical signal pulse generated by the optical signal generation module is transmitted to the N power amplification modules through the first collimator, the filter, and the second collimator sequentially. In this way, light can be coupled into the power amplification module with maximum efficiency. In addition, the quality of the optical signal pulse is ensured, and energy utilization can also be effectively improved.

A collimator structure in embodiments of this application may be implemented by using different structures.

For example, a structure of the first collimator may use a single lens, or may use a lens combination. Specifically, the collimator structure may use a common lens that refracts divergent light into parallel light, for example, a single-sided convex lens, a double-sided convex lens, or a prism. Alternatively, the collimator structure may use a different lens combination such as a combination of a convex lens and a concave lens, a combination of a convex lens and a convex lens, or a combination of a convex lens and a prism, to refract divergent light into parallel light.

The first collimator and the second collimator in this embodiment of this application are used as optional components. When light emitted by a seed source in the optical signal generation module is divergent light, the first collimator and the second collimator are added between the optical signal generation module and the power amplification module. When light emitted by a seed source in the optical signal generation module is parallel light, the first collimator and the second collimator may not be added between the optical signal generation module and the power amplification module.

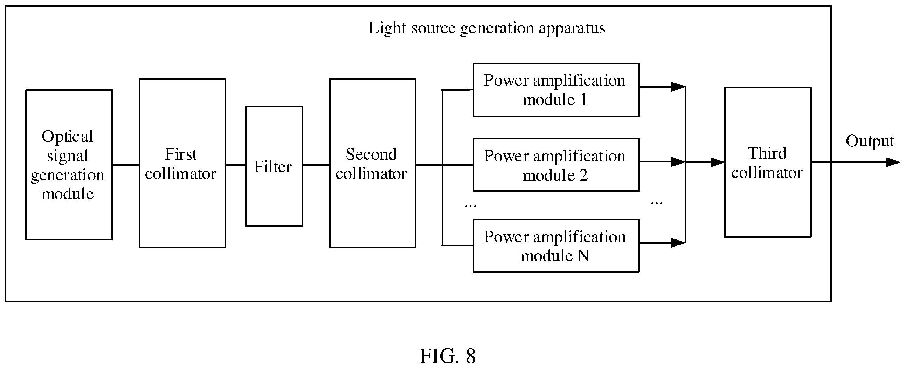

In addition, as shown in FIG. 8, an optical signal pulse output by a power amplification module connected to an optical signal generation module in a light source generation apparatus may be converged to a third collimator for output, so that energy utilization can be effectively improved.

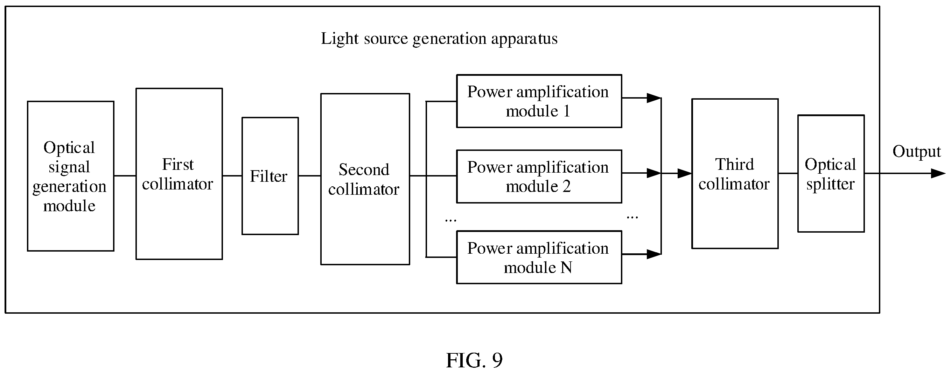

Further, based on FIG. 8, a third collimator may alternatively be connected to an optical splitter, as shown in FIG. 9, to implement optical splitting output for output, so that power interception can be better implemented and flexibility is higher.

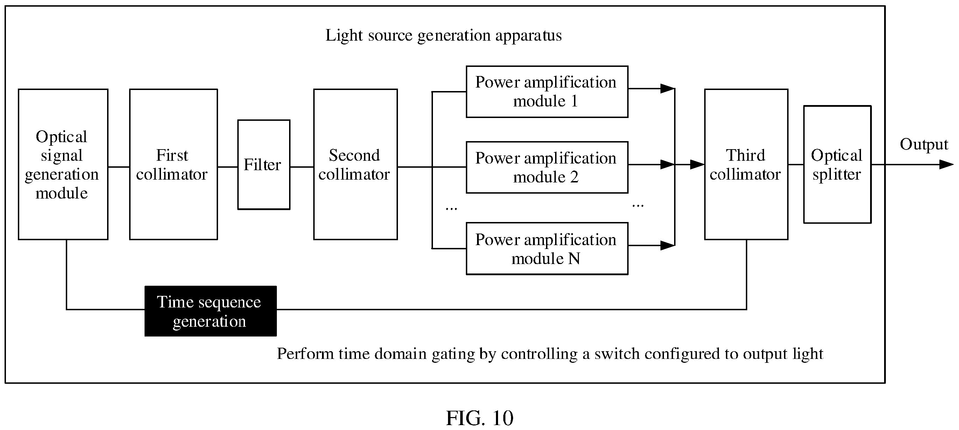

Further, based on FIG. 9, an optical signal generation module may alternatively perform time domain gating by controlling a switch that is of a third collimator and that is configured to output light, as shown in FIG. 10, so that a parasitic pulse can be effectively removed, and advance leakage of an optical signal pulse can be reduced.

It should be understood that the light source generation apparatuses shown in FIG. 1 to FIG. 10 do not constitute a limitation on a system architecture of a light source generation apparatus to which embodiments of this application can be applied, and are merely specific examples of the light source generation apparatus. In this application, the light source generation apparatus may be further transformed based on the foregoing content. This is not limited herein.

Embodiments of this application further provide a lidar. The lidar includes the optical signal generation module in any one of the foregoing light source generation apparatuses.

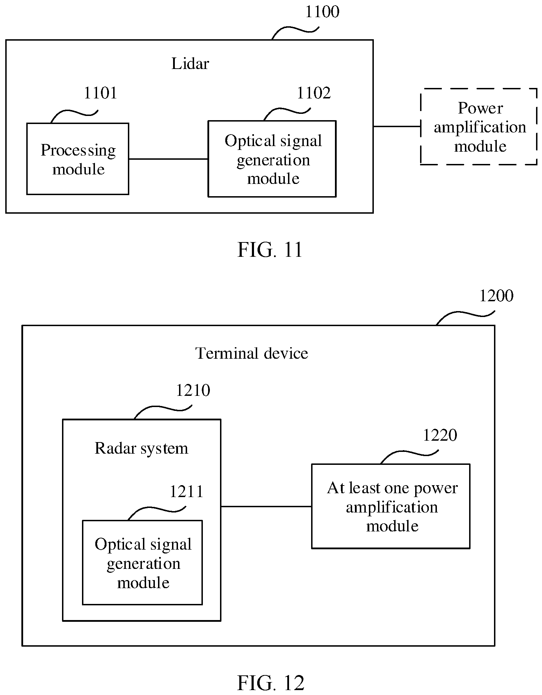

FIG. 11 is a possible diagram of a structure of a radar apparatus. A lidar 1100 may include a processing module 1101 and an optical signal generation module 1102.

The processing module 1101 may be a processor in the radar apparatus or another chip with an optical signal processing function. The processing module 1101 is connected to the optical signal generation module in the light source generation apparatus, to control the light source generation apparatus to work. A specific control manner is a common control manner. Details are not described herein again.

Embodiments of this application further provide a terminal device. The terminal device includes the foregoing light source generation apparatus. For example, the terminal device may be, for example, a vehicle (for example, an unmanned vehicle, a smart vehicle, an electric vehicle, or a digital vehicle), a robot, a surveying and mapping device, an unmanned aerial vehicle, a smart home device (for example, a television, a robotic vacuum cleaner, a smart desk lamp, a sound system, a smart lighting system, an electrical control system, home background music, a home theater system, an intercom system, or video surveillance), a smart manufacturing device (for example, an industrial device), a smart transportation device (for example, an automated guided vehicle (automated guided vehicle, AGV), an unmanned transportation vehicle, or a truck), or a smart terminal (a mobile phone, a computer, a tablet computer, a palmtop computer, a desktop computer, an earphone, a stereo, a wearable device, a vehicle-mounted device, a virtual reality device, an augmented reality device, or the like).

For example, FIG. 12 is a possible diagram of a structure of a terminal device. A terminal device 1200 may include a radar system 1210. The radar system includes an optical signal generation module 1211 in a light source generation apparatus. The terminal device 1200 further includes a power amplification module 1220 in the light source generation apparatus. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It is clear that a person skilled in the art can make various modifications and variations to this application without departing from the scope of this application. In this case, this application is intended to cover these modifications and variations of this application provided that they fall within the scope of protection defined by the claims of this application and their equivalent technologies.

## Claims

1. A light source generation apparatus, comprising an optical signal generation module and N power amplification modules, wherein the optical signal generation module is connected to the N power amplification modules, and N is a positive integer;
the optical signal generation module is configured to generate an optical signal pulse;
the N power amplification modules are configured to amplify the optical signal pulse; and the optical signal generation module is located in a lidar, and the N power amplification modules are located outside the lidar.

2. The light source generation apparatus according to claim 1, wherein the optical signal pulse generated by the optical signal generation module is transmitted to the N power amplification modules through a filter; and
the filter is configured to perform noise reduction processing on the optical signal pulse.

3. The light source generation apparatus according to claim 1 or 2, wherein the optical signal pulse generated by the optical signal generation module is transmitted to the N power amplification modules through a first collimator, a filter, and a second collimator sequentially;
the first collimator is configured to convert the optical signal pulse in the optical signal generation module into collimated light; and
the second collimator is configured to couple the collimated light to the N power amplification modules.

4. The light source generation apparatus according to any one of claims 1 to 3, wherein the optical signal generation module comprises one or more of the following: a seed source configured to generate the optical signal pulse, at least one optical isolator, at least one pump source, at least one erbium-doped optical fiber, a circulator, a Faraday reflector, at least one combiner, and a temperature control apparatus.

5. The light source generation apparatus according to claim 4, wherein the pump source in the optical signal generation module comprises a first pump source and a second pump source, a band of the first pump source is 900 nm to 1000 nm, and a band of the second pump source is 1400 nm to 1500 nm.

6. The light source generation apparatus according to any one of claims 1 to 5, wherein the power amplification module comprises one or more of the following: a circulator, at least one combiner, at least one pump source, at least one optical fiber, a filter, a temperature control apparatus, and a Faraday reflector; and
each power amplification module of the N power amplification modules is of a different structure, each power amplification module of the N power amplification modules is of a same structure, or some power amplification modules of the N power amplification modules are of a same structure.

7. The light source generation apparatus according to any one of claims 1 to 6, wherein the N power amplification modules are selected from H power amplification modules for connection, to form the light source generation apparatus; and
H is a positive integer, and H is greater than or equal to N.

8. The light source generation apparatus according to claim 7, wherein in the H power amplification modules, the N connected power amplification modules are switched to M power amplification modules in a pluggable manner, and M is a positive integer; and
the N power amplification modules and the M power amplification modules are used in different scenarios.

9. The light source generation apparatus according to claim 8, wherein
when amplification power needs to be reduced, a first power amplification module connected to the optical signal generation module is switched to a second power amplification module, and amplification power of the first power amplification module is greater than amplification power of the second power amplification module;
when amplification power needs to be increased, the second power amplification module connected to the optical signal generation module is switched to the first power amplification module, and amplification power of the first power amplification module is greater than amplification power of the second power amplification module;
when amplification power needs to be increased, the optical signal generation module is additionally connected to the second power amplification module on the basis of being connected to the first power amplification module;
when amplification power needs to be increased, the first power amplification module connected to the optical signal generation module is switched to the second power amplification module and a third power amplification module, and a sum of amplification power of the second power amplification module and the third power amplification module is greater than amplification power of the first power amplification module; or
when amplification power needs to be reduced, the second power amplification module and the third power amplification module that are connected to the optical signal generation module are switched to the first power amplification module, and a sum of amplification power of the second power amplification module and the third power amplification module is greater than amplification power of the first power amplification module.

10. The light source generation apparatus according to claim 9, wherein a quantity of optical fibers in the second power amplification module is less than a quantity of optical fibers in the first power amplification module; or
power of the pump source of the second power amplification module is less than power of the pump source of the first power amplification module.

11. The light source generation apparatus according to any one of claims 1 to 10, wherein the power amplification module performs temperature control adjustment independently of the optical signal generation module.

12. The light source generation apparatus according to any one of claims 1 to 11, wherein an optical signal pulse amplified by the N power amplification modules is converged to a third collimator for output.

13. The light source generation apparatus according to claim 12, wherein the optical signal generation module is further configured to:
perform time domain gating by controlling a switch that is of the third collimator and that is configured to output light.

14. The light source generation apparatus according to claim 12 or 13, wherein the third collimator is further configured to be connected to an optical splitter, to implement optical splitting output.

15. A detection device, comprising the light source generation apparatus according to any one of claims 1 to 14.

16. A terminal, comprising the light source generation apparatus according to any one of claims 1 to 14.
